# FASCICULE DE BREVET EUROPEEN

(11) **EP 1 790 893 B1**
(45) Date de publication et mention de la délivrance du brevet: **06.08.2008**
(21) Numéro de dépôt: 06301167.0
(22) Date de dépôt: 22.11.2006
(51) Int. Cl.: F16K 35/06

(54) **Robinet quart de tour à papillon de manoeuvre d'ouverture/fermeture verrouillable**
Vierteldrehungsventil mit verriegelbarem Betätigungsgriff zum Öffnen/Verschliessen
Quarter turn valve with lockable operating handle for opening/closing

(30) Priorité: 23.11.2005 FR 0553578
(43) Date de publication de la demande: 30.05.2007
(73) Titulaire: SAINTE LIZAIGNE SA, 75008 PARIS (FR)
(72) Inventeur: Murias, Lionel, 36100, Issoudun (FR); Verhee, Damien, 36100, Issoudun (FR)
(74) Mandataire: Michelet, Alain

(56) Documents cités:
- EP-A- 0 355 457
- FR-A- 2 717 552
- FR-A- 2 721 371
- FR-A- 2 783 895
- GB-A- 2 279 132

## Description

La présente invention concerne un robinet quart de tour à papillon de manoeuvre d'ouverture/fermeture verrouillable. Elle a des utilisations dans le domaine du contrôle de la distribution de fluides et, notamment, la distribution d'eau. Elle permet d'obtenir un blocage sécurisé en ouverture et/ou fermeture d'un robinet et de détecter des tentatives de fraude, un déblocage frauduleux entraînant la destruction du robinet et/ou d'un organe de contrôle (notamment fil métallique plombé). Elle peut, d'une manière particulièrement intéressante, être mise en oeuvre avec des robinets traditionnels moyennant un simple changement de l'organe de manoeuvre (papillon) du robinet.

Les réseaux de distribution d'eau comportent plusieurs organes d'arrêts situés en différents points du circuit. Au niveau du branchement (partie allant de la canalisation de distribution au réseau interne de l'abonné), un montage classique comporte un robinet de prise en charge ou de branchement (robinets sous chaussée manipulables avec une clé de fontainier en té) permettant au distributeur d'eau la fermeture du branchement en cas d'incident sur le circuit aval, de condamnation temporaire ou définitive en cas d'absence, changement de résident (donc de contrat) ou non paiement, un robinet avant compteur et/ou un robinet après compteur situés de part et d'autre du compteur d'eau. Les robinets de compteur ont pour fonction, pour l'abonné, de permettre l'arrêt d'eau lors d'absences prolongées, incident sur son circuit interne, etc. et, pour le distributeur, de permettre l'intervention sur le compteur ou les éléments hydrauliques en coupant l'arrivée d'eau. Les robinets de compteur sont équipés d'un organe de manoeuvre à la main appelé papillon de manoeuvre. Le robinet avant compteur est généralement la propriété du distributeur d'eau.

Afin d'interdire la manipulation du robinet avant-compteur, notamment pour empêcher les interventions intempestives sur le compteur, il existe des systèmes dits "inviolables". Ils sont destinés à protéger la manoeuvre du robinet par une condamnation à clé ou à verrou ou nécessitant un outil spécial. Ces systèmes permettent de bloquer d'une manière réversible (temporairement) le robinet en position ouvert ou fermé. Lorsque ces robinets inviolables sont utilisés, un robinet après compteur est monté afin de permettre la coupure de l'eau par l'abonné.

Pour des raisons économiques et de limitation de l'impact sur la voirie, les distributeurs d'eau sont amenés à supprimer les robinets dits de branchement, c'est-à-dire situés sous chaussée et permettant l'arrêt d'eau à partir du domaine public grâce à une clé de fontainier. Dans ce cas, lorsqu'il est nécessaire de couper l'eau d'un abonné (changement d'occupant, donc de contrat, arrêt pour déficit de paiement) la condamnation temporaire du branchement n'est plus possible.

Afin de garder la maîtrise des branchements, il est donc nécessaire d'adopter des systèmes de robinets avant compteur inviolables ou pouvant être rendus inviolables lorsque l'interruption du branchement est nécessaire.

Dans le domaine en question il a été proposé dans les documents FR-2717552 et FR-2721371 des robinets inviolables. D'autres dispositifs de robinets à verrouillage ont également été proposés dans les documents FR-2783895, EP-0355457 et GB-2279132.

Une première difficulté réside dans le fait qu'il est difficile pour un distributeur de connaître à priori les lieux où seront nécessaires des robinets inviolables. D'autre part, le coût des systèmes inviolables existants rend difficile leur généralisation : ces robinets inviolables étant spécifiques et en général plus coûteux que des robinets classiques.

Un des buts de la présente invention est de pouvoir utiliser un équipement standard pour un large ensemble de robinets de compteur et pouvant être à priori ou a posteriori transformé facilement et dans des conditions d'utilisation réelles, sur le terrain, en système inviolable. Un autre but est de proposer un système simple de robinet inviolable économique sur la base d'un robinet standard ou ne nécessitant que peu de modifications par rapport à un robinet standard, n'engendrant ainsi pas de surcoût significatif sur le robinet standard. De ne nécessiter aucun démontage ou opération importante sur site pour transformer un robinet standard en robinet inviolable. De ne pas nécessiter l'utilisation d'outillage particulier et d'être simple d'utilisation tout en étant fiable et assurant la tenue dans le temps, en particulier dans les environnements des robinets de compteur (saletés, humidité). D'être un obstacle à la fraude et si fraude il y a, qu'elle ne soit possible que par destruction du matériel (afin qu'un constat de cette fraude soit possible).

La présente invention concerne donc, un robinet quart de tour à papillon de manoeuvre d'ouverture/fermeture verrouillable, le robinet ayant une tête de commande sensiblement cylindrique se poursuivant axialement vers le haut par une tige de commande en rotation, le papillon étant fixé sur (solidarisé à) la tige de commande pour entraînement en rotation de ladite tige en fonction de la rotation dudit papillon, la tête de commande comportant au moins une butée coopérant avec au moins une contre-butée correspondante (il peut y avoir deux butées et dans ce cas on peut avoir deux ou quatre contre-butées) du papillon et destinés à limiter la rotation du papillon avec entraînement de la tige de commande sur un quart de tour seulement.

Selon l'invention, le papillon du robinet est un organe tubulaire comportant intérieurement un plateau de fixation de la tige de commande, ledit plateau de fixation sensiblement horizontal séparant l'espace interne creux du papillon en une partie de tête, vers le bas et la tête du robinet, et une partie de verrouillage, vers le haut à l'opposé de la précédente, la partie de verrouillage comportant un moyen de verrouillage d'un cavalier d'immobilisation en rotation du papillon, le cavalier comportant au moins une patte allongée (verticale) s'étendant à travers une ouverture ajustée du plateau de fixation entre la partie de tête et la partie de verrouillage et qui peut être, en condition de déverrouillage, déplacé verticalement en translation afin de pouvoir engager ou dégager la patte de la partie de tête, et, en condition de verrouillage, bloqué avec la patte engagée dans la partie de tête, la patte engagée dans la partie de tête avec le papillon en butée étant alors disposée entre une butée et une contre-butée, l'ouverture ajustée du plateau de fixation immobilisant en rotation la patte par rapport au papillon (n'autorisant pas une rotation de la patte par rapport au papillon), le moyen de verrouillage en condition de verrouillage permettant d'immobiliser en translation le cavalier dans l'espace interne creux du papillon (n'autorisant pas une translation de la patte par rapport au plateau de fixation en empêchant l'extraction du cavalier vers le haut hors de la partie de verrouillage du papillon).

Dans le cadre de l'invention et en alternative équivalente, chacune ou une de la/des pattes du cavalier peut venir se bloquer entre deux ergots spécifiques de blocage de patte disposés sur la tête de robinet ou entre un ergot spécifique de blocage de patte disposé sur la tête de robinet et la butée de tête de robinet. De même en alternative équivalente, chacune ou une de la/des pattes du cavalier peut venir se bloquer dans une gorge de blocage ajustée (ne permettant pas une rotation) de la tête de robinet. Toutefois, ces alternatives nécessitent la réalisation de butée(s) et/ou gorge(s) spécifiques pour la/les pattes de cavalier sur les robinets. Ainsi, on préférera plutôt utiliser un robinet classique avec sa/ses butées de limitation de rotation quart de tour d'un papillon de manoeuvre classique et remplacer le papillon de manoeuvre classique par le papillon mis en oeuvre dans l'invention.

Dans divers modes de mise en oeuvre de l'invention, les moyens suivants pouvant être utilisés seuls ou selon toutes les combinaisons techniquement possibles, sont employés :
- le papillon comporte extérieurement au moins une aile de manipulation,
- le papillon comporte extérieurement deux ailes de manipulation disposées sensiblement symétriquement de part et d'autre du papillon,
- le papillon est en matière thermoplastique ou thermodurcissable,
- le papillon est en métal résistant à la corrosion en milieu humide,
- le papillon est monobloc,
- le papillon comporte au moins un orifice traversant pour passage d'un fil de contrôle de sécurité du type fil métal plombé ou plastique inviolable,
- la tête de robinet comporte au moins une gorge circulaire étendue sur environ 90° et limitée à ses deux extrémités par des butées, le papillon comportant au moins un ergot vertical formant contre-butée destiné à circuler dans ladite gorge,
- la tête de robinet comporte deux gorges circulaires étendues chacune sur environ 90° et limitée à leurs deux extrémités par des butées, les gorges étant disposées symétriquement de part et d'autre de la tête de robinet, le papillon comportant deux ergots formant contre-butées, chacun des ergots étant destiné à circuler dans une des gorges,
- la tête de robinet comporte au moins une butée en forme d'ergot débordant sensiblement à l'horizontale, le papillon comportant dans sa partie de tête, intérieurement, un évidement circulaire sensiblement horizontal limité par des contre-butées à ses deux extrémités et dans lequel peut circuler sur un quart de tour la butée,
- la tête de robinet comporte deux butées diamétralement opposées en forme d'ergots débordants sensiblement à l'horizontale, le papillon comportant dans sa partie de tête, intérieurement, deux évidements circulaires sensiblement horizontaux, diamétralement opposés, chacun des évidements étant limité par des contre-butées à ses deux extrémités et la butée correspondante pouvant y circuler sur un quart de tour, et le cavalier est en forme de U inversé avec deux pattes, le plateau de fixation comportant deux ouvertures ajustées diamétralement opposées, chacune permettant le passage d'une des pattes, chacune des pattes venant interférer dans l'évidemment correspondant avec une butée et contre-butée correspondante,
- le papillon du robinet comporte intérieurement des colonnes de guidage latérales de la patte du cavalier vers l'ouverture ajustée du plateau de fixation, les colonnes de guidage étant étendues de haut en bas dans la partie de verrouillage du papillon,
- le cavalier comporte deux pattes et le papillon du robinet comporte intérieurement deux paires de colonnes de guidage latérales, chacune des pattes du cavalier étant guidée latéralement par une paire de colonnes de guidage vers l'ouverture ajustée du plateau de fixation,
- les bords des colonnes de guidage latérales sont inclinés vers l'extrémité correspondante de l'ouverture ajustée correspondante du plateau de fixation, les bords d'une paire de colonnes de guidage latérales étant plus écartés vers l'extrémité supérieure de la partie de verrouillage,
- le moyen de verrouillage du cavalier est choisi parmi un des moyens suivants :
   - un collage, (avec apport d'adhésif)
   - un soudage avec (cire fondue, pistolet à colle chaude) ou sans (rivetage à chaud d'un/de tétons du papillon réalisé dans une matière thermoplastique) apport de matière,
   - une rondelle clipsable dans une gorge circulaire de la partie de verrouillage du papillon,
   - une rondelle clipsable dans une gorge circulaire de la tige de commande, le plateau de fixation et le cavalier étant percés axialement pour passage de ladite tige de commande vers la partie de verrouillage,
   - un cylindre (serrure) à clef (ou équivalent à de clef) avec stator et rotor, le cylindre comportant une came solidaire en rotation avec le rotor, le cavalier étant fixé à l'extrémité du cylindre libre en rotation par rapport audit cylindre, la partie de verrouillage du papillon comportant au moins un épaulement débordant vers l'intérieur pouvant coopérer avec la came en position de verrouillage (l'épaulement doit être vers le haut par rapport à la came pour la bloquer en extraction lorsque la came est placée sous l'épaulement, une rainure dans laquelle peut circuler la came pour passer de la position de déblocage/déverrouillage à la position de blocage/verrouillage comporte un tel épaulement), la came étant alors bloquée en rotation par le cylindre et bloquée en translation par l'épaulement en empêchant l'extraction du cylindre hors de la partie de verrouillage du papillon et le stator étant bloqué en rotation dans la partie de verrouillage du papillon,
- la tige de commande comporte au moins un méplat (ou d'une manière équivalente des indentations) et le plateau de fixation du papillon comporte une forme creuse complémentaire pour au moins blocage en rotation entre ladite tige de commande et ledit papillon et le moyen permettant de fixer le papillon sur la tige de commande est choisi parmi :
   - un vissage, l'extrémité de la tige de commande étant filetée et traversant par un orifice (la forme creuse est percée) axial le plateau de fixation, un écrou étant vissé sur l'extrémité de la tige de commande dans la partie de verrouillage du papillon,
   - un collage (avec apport d'adhésif) de la tige de commande dans la forme creuse complémentaire,
   - un soudage avec ou sans (rivetage ou rabattage à chaud d'un/de tétons du papillon réalisé dans une matière thermoplastique) apport de matière,
   - un forçage de la tige de commande dans la forme creuse complémentaire,
   - un clipsage, l'extrémité de la tige de commande comportant une gorge circulaire et traversant par un orifice axial le plateau de fixation, une rondelle clipsable étant clipsée dans la gorge de l'extrémité de la tige de commande dans la partie de verrouillage du papillon,
   - un lien rendu solidaire du papillon et devant être rompu ou endommagé pour être retiré,
   - une pièce maintenue par un lien rendu solidaire du papillon et devant être rompu ou endommagé pour être retiré,
   - un fil de plombage rendu solidaire du papillon et devant être rompu ou endommagé pour être retiré,
   - une pièce maintenue par un fil de plombage rendu solidaire du papillon et devant être rompu ou endommagé pour être retiré,
- le moyen permettant de fixer le papillon sur la tige de commande comporte un renfort sous la forme d'un insert métallique plan globalement circulaire s'engrainant en périphérie à la face interne du papillon dans sa partie de tête et en engagement de blocage en rotation sur la tige de commande par un orifice axial au niveau du (des) méplat(s) et l'insert ayant son orifice axial de forme complémentaire de la tige de commande,
- l'insert métallique s'engrainant en périphérie à la face interne du papillon met en oeuvre un assemblage prismatique (en forme de croix celtique par exemple),
- l'insert métallique est dans un matériau non corrodable en milieu humide,
- l'insert est en inox,
- le moyen de verrouillage du cavalier est un cylindre à clef avec stator et rotor, le cylindre comportant une came solidaire en rotation avec le rotor, le cavalier étant fixé à l'extrémité du cylindre libre en rotation par rapport audit cylindre, la came ayant deux extrémités opposées, la partie de verrouillage du papillon comportant deux épaulements opposés diamétralement, débordants vers l'intérieur, chacun des épaulements pouvant coopérer avec l'extrémité correspondante de la came en position de verrouillage, la came étant alors bloquée en rotation par le cylindre et bloquée en translation par les épaulements en empêchant l'extraction du cylindre hors de la partie de verrouillage du papillon et le stator étant bloqué en rotation dans la partie de verrouillage du papillon, et le moyen permettant de fixer le papillon sur la tige de commande est un vissage, l'extrémité de la tige de commande étant filetée et traversant par un orifice axial le plateau de fixation, un écrou étant vissé sur l'extrémité de la tige de commande dans la partie de verrouillage du papillon,
- le papillon comporte en outre un cache (capuchon/chapeautage) amovible en matière déformable (caoutchouc ou thermoplastique) permettant de protéger la partie supérieure libre du cylindre (celle destinée à recevoir la clé) de l'humidité et des salissures,
- le cache est rendu imperdable par un lien souple,
- la face inférieure orientée vers le plateau de fixation de l'épaulement est arrondie concave afin de faciliter l'engagement de la came du cylindre sous ledit épaulement,
- le papillon est réalisé par moulage et le plateau de fixation du papillon est en outre perforé à la verticale (en regard) de chaque épaulement pour permettre le passage d'une forme de réalisation d'épaulement du moule,
- le moule ne comporte pas de pièce mobile, (autre que celle nécessaire à l'ouverture/fermeture du moule pour extraire le papillon formé)
- le papillon est réalisé par moulage et la partie de verrouillage tubulaire du papillon est en outre perforé sensiblement horizontalement vers l'extérieur sous chaque épaulement pour permettre le passage d'une forme de réalisation d'épaulement extraite radialement vers l'extérieur du papillon lors du démoulage dudit papillon,
- dans le cas où au moins une aile de manipulation est présente sur le papillon, la perforation vers l'extérieur est en partie masquée par l'aile.

L'invention concerne également un papillon de manoeuvre selon la revendication 10.

Le papillon peut être décliné selon diverses variantes comportant une ou plusieurs des caractéristiques précédemment listées en relation avec le robinet et, notamment, le papillon est tel que :
- pour une tête de robinet comportant deux butées diamétralement opposées en forme d'ergots débordants sensiblement à l'horizontale, le papillon comporte dans sa partie de tête, intérieurement, deux évidements circulaires sensiblement horizontaux, diamétralement opposés, chacun des évidements étant limité par des contre-butées à ses deux extrémités et la butée correspondante pouvant y circuler sur un quart de tour, et le cavalier est en forme de U inversé avec deux pattes, le plateau de fixation comportant deux ouvertures ajustées diamétralement opposées, chacune permettant le passage d'une des pattes, chacune des pattes venant interférer dans l'évidemment correspondant avec une butée et contre-butée correspondante,
- le moyen de verrouillage du cavalier est un cylindre à clef avec stator et rotor, le cylindre comportant une came solidaire en rotation avec le rotor, le cavalier étant fixé à l'extrémité du cylindre libre en rotation par rapport audit cylindre, la came ayant deux extrémités opposées, la partie de verrouillage du papillon comportant deux épaulements opposés diamétralement, débordants vers l'intérieur, chacun des épaulements pouvant coopérer avec l'extrémité correspondante de la came en position de verrouillage, la came étant alors bloquée en rotation par le cylindre et bloquée en translation par les épaulements en empêchant l'extraction du cylindre hors de la partie de verrouillage du papillon et le stator étant bloqué en rotation dans la partie de verrouillage du papillon, et pour une tige de commande comportant au moins un méplat, le plateau de fixation du papillon comporte une forme creuse complémentaire pour au moins blocage en rotation entre ladite tige de commande et ledit papillon et le moyen permettant de fixer le papillon sur la tige de commande est un vissage, l'extrémité de la tige de commande étant filetée et traversant par un orifice axial le plateau de fixation, un écrou étant vissé sur l'extrémité de la tige de commande dans la partie de verrouillage du papillon,
- le papillon est réalisé par moulage et le plateau de fixation du papillon est en outre perforé à la verticale de chaque épaulement par des ouvertures de moulage qui sont les vestiges de doigts de moulage destinés à réaliser, lors du moulage du papillon, les épaulements.

L'invention concerne également un procédé de mise en oeuvre d'un robinet, ayant une ou plusieurs des caractéristiques précédemment listées, et dans lequel notamment :
- alors que le moyen de verrouillage à cavalier est déverrouillé et la/les pattes dudit cavalier désengagées de la partie de tête du papillon, on tourne à fond le papillon puis on réengage la/les pattes dudit cavalier dans la partie de tête du papillon afin que la/les pattes soient disposées entre une butée et une contre-butée, puis on place le moyen de verrouillage en condition de verrouillage afin d'immobiliser en translation le cavalier dans l'espace interne creux du papillon,
- le procédé est mis en oeuvre pour bloquer le robinet en position de fermeture,
- le procédé est mis en oeuvre pour bloquer le robinet en position d'ouverture,
- le papillon comporte un cache (capuchon/chapeautage) et on rabat et fixe le cache sur l'extrémité supérieure du papillon afin de protéger le moyen de verrouillage),
- pour transformer le robinet verrouillé en robinet non verrouillé, on retire le cavalier et le moyen de verrouillage du papillon par l'extrémité supérieure libre de la partie de verrouillage du papillon,
- une fois le cavalier et le moyen de verrouillage retirés, on bouche l'extrémité supérieure avec un bouchon,
- on rend le bouchon amovible afin de permettre une remise en place dans le papillon d'un cavalier et d'un moyen de verrouillage,
- le bouchon est de préférence relié au papillon par un lien souple le rendant imperdable,
- pour transformer le robinet non verrouillé en robinet verrouillé, on remet en place dans le papillon d'un cavalier et d'un moyen de verrouillage.

La présente invention va maintenant être exemplifiée sans pour autant en être limitée avec la description qui suit en relation avec les figures suivantes:
la Figure 1 qui représente un robinet selon l'invention en vue latérale perspective éclatée et sans son moyen de verrouillage à cavalier,
la Figure 2 qui représente une vue latérale perspective éclatée du moyen de verrouillage à cavalier à deux pattes,
la Figure 3 qui représente en vue latérale perspective semi-transparence le papillon du robinet avec le moyen de verrouillage à cavalier en place,
la Figure 4i qui représente une vue de dessous, par la partie de tête, d'un premier exemple de réalisation d'un papillon selon l'invention,
la Figure 4s qui représente une vue de dessus, par la partie de verrouillage, du même premier exemple de réalisation d'un papillon selon l'invention,
la Figure 4A-A qui représente une coupe verticale selon A-A du même premier exemple de réalisation du papillon selon l'invention,
la Figure 4C-C qui représente une coupe verticale selon C-C du même premier exemple de réalisation du papillon selon l'invention,
la Figure 4D-D qui représente une coupe verticale selon D-D du même premier exemple de réalisation du papillon selon l'invention,

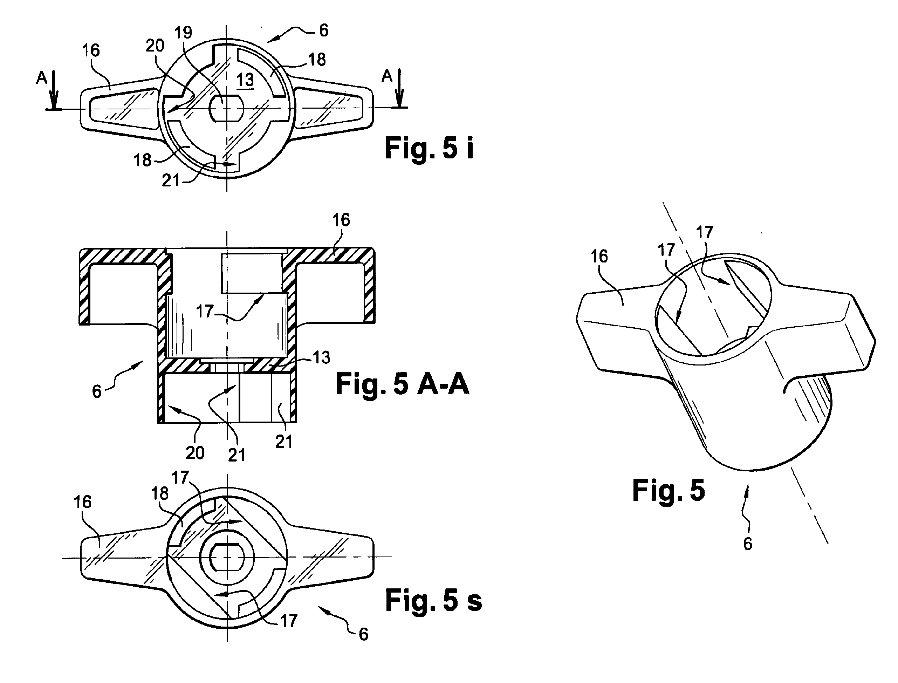

la Figure 5 qui représente une vue perspective d'un deuxième exemple de réalisation d'un papillon selon l'invention,
la Figure 5i qui représente une vue de dessous, par la partie de tête, du deuxième exemple de réalisation d'un papillon selon l'invention,
la Figure 5s qui représente une vue de dessus, par la partie de verrouillage, du deuxième exemple de réalisation d'un papillon selon l'invention,
la Figure 5A-A qui représente une coupe verticale selon A-A du deuxième exemple de réalisation d'un papillon selon l'invention,

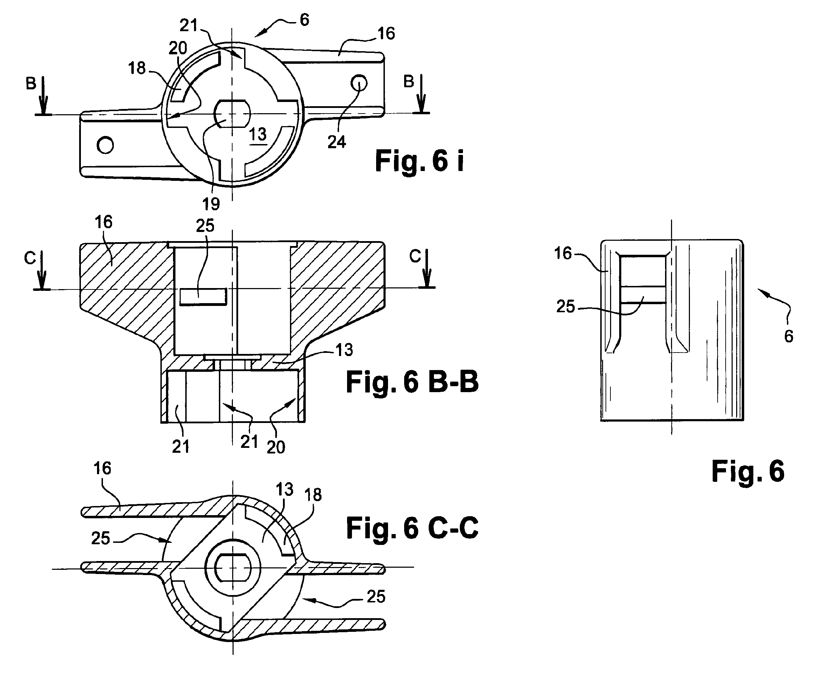

la Figure 6 qui représente une vue latérale d'un troisième exemple de réalisation d'un papillon selon l'invention,
la Figure 6i qui représente une vue de dessous, par la partie de tête, du troisième exemple de réalisation d'un papillon selon l'invention,
la Figure 6B-B qui représente une coupe verticale selon B-B du troisième exemple de réalisation d'un papillon selon l'invention,
la Figure 6C-C qui représente une coupe horizontale selon C-C du troisième exemple de réalisation d'un papillon selon l'invention.

Le robinet de l'invention comporte préférentiellement un papillon de manoeuvre en matière plastique, recevant un insert de renfort plat, disposant d'une partie centrale tubulaire évidée, et rendu solidaire avec l'axe de manoeuvre du robinet.

Plus généralement le papillon tubulaire est en matière plastique ou en métal résistant à la corrosion. De préférence, le papillon est monobloc. Il est doté d'une partie centrale tubulaire évidée. Le papillon peut comporter au moins une, de préférence deux, proéminences ou ailes, extérieures sur sa périphérie, et destinés à faciliter sa manipulation à la main.

Le papillon est rendu solidaire en rotation avec l'axe de manoeuvre du robinet, solidarisation renforcée par un insert en inox s'engrainant dans la paroi interne du papillon. L'ensemble papillon et insert est immobilisé axialement par rapport à la tige de commande du robinet par un écrou de serrage. L'insert en inox (ou autre métal résistant à la corrosion) est immobilisé en rotation par rapport au papillon par un assemblage prismatique. L'insert permet d'assurer la résistance à l'effort de manoeuvre et peut permettre d'augmenter la précision de position des arrêts vis-à-vis de l'axe de manoeuvre. La zone centrale évidée du papillon, partie de verrouillage, reçoit une serrure (=cylindre) à came ou un système avec obstacle pivotant quart de tour. Le corps de la serrure comporte au moins un plat ou une forme parallèle à l'axe.

L'intérieur de la partie tubulaire évidée du papillon comprend au moins un bossage/épaulement coopérant avec un plat de la serrure pour le blocage en rotation de celle-ci lorsqu'elle est insérée dans le papillon et pour blocage en extraction de la came afin d'empêcher l'extraction de la serrure de l'intérieur de la partie centrale lorsque la came est amenée sous l'épaulement. De préférence, la face inférieure de l'épaulement de blocage est de forme concave de manière à faciliter la manoeuvre (quart de tour de clef) de la serrure et l'engagement de la came sous l'épaulement. La came est solidaire en rotation du rotor de la serrure et coopère avec le(s) épaulement(s) de la partie de verrouillage intérieure au papillon tubulaire lorsque la serrure est verrouillée. La serrure comporte une pièce en forme de cavalier immobilisé axialement mais mobile en rotation par rapport au rotor de la serrure. Les parties inférieures du cavalier (pattes) sont de forme circulaire afin d'être inscrits dans un anneau dont le diamètre extérieur est compris dans le diamètre intérieur de la partie tubulaire du papillon et le diamètre intérieur est supérieur au diamètre de la tête du robinet autour de l'axe de manoeuvre. Le plateau de fixation de la tige de commande séparant en deux parties l'espace intérieur évidé du papillon est doté d'ouvertures pour passage des parties inférieures du cavalier (pattes).

La partie de tête (partie interne évidée du papillon sous le plateau de fixation, donc coté tête de robinet) comporte en périphérie intérieure au moins un évidement correspondant à l'arc de cercle où peut circuler l'arrêt (butée) du robinet entre les arrêts (contre-butées) du papillon. Chaque évidement peut également accueillir une partie verticale faisant partie de la serrure, c'est-à-dire une patte du cavalier, et qui a traversé le plateau de fixation par une ouverture ajustée (c'est-à-dire qui empêche la rotation de la patte par rapport au plateau de fixation donc au papillon). L'intérieur de la partie tubulaire du papillon est préférentiellement dotée de nervures verticales (compatibles avec le sens de moulage de la pièce) destinées à guider les parties verticales du cavalier, c'est-à-dire les pattes du cavalier, vers les ouvertures du plateau de fixation. Lorsque la serrure est insérée dans la partie tubulaire du papillon, le passage des parties verticales, pattes, du cavalier dans les ouvertures du plateau de fixation permet au cavalier d'immobiliser en rotation le papillon par rapport au robinet en interposant les pattes du cavalier entre les arrêts du papillon et ceux du robinet, en position ouvert ou fermé. La forme générale du papillon tient compte des contraintes de réalisation en injection plastique (dépouille, plan de joint, sens de démoulage) avec un outillage simple (sans tiroir). L'épaulement de blocage de la serrure coopère avec des ouvertures du plateau de fixation dans la partie inférieure du papillon et qui sont destinées à l'obtention de l'épaulement dans l'outillage d'injection et à permettre un démoulage. La partie supérieure du papillon peut recevoir des trous destinés au passage d'un fil de plombage pour réaliser un scellé du compteur ou du papillon. La serrure est préférentiellement dotée d'un cache amovible en matière déformable (caoutchouc ou thermoplastique) permettant de protéger la serrure (cylindre) de l'humidité et des salissures.

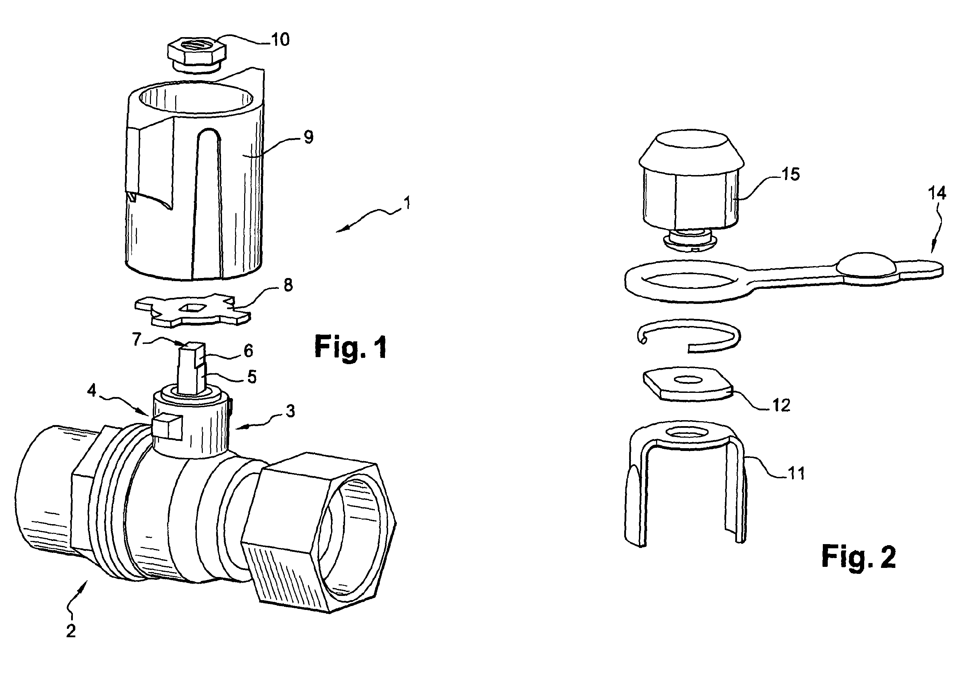

Sur la Figure 1 on a un robinet 1 selon l'invention en vue latérale perspective éclatée comportant : un corps de robinet 2 avec sa tête 3 de commande se poursuivant vers le haut par une tige de commande 5 et un papillon 9 tubulaire (creux intérieurement) ou organe de manoeuvre qui, sur cette figure, est sans son moyen de verrouillage à cavalier. La tige de commande comporte au moins un méplat 5 et une extrémité filetée 7. Un insert métallique 8 comportant un orifice axial complémentaire de la partie avec méplats de l'axe de commande pour entraînement en rotation comporte en périphérie des indentations pour engrainement d'entraînement en rotation à l'intérieur du papillon 9. Un écrou 10 vient se visser sur extrémité filetée 7 de la tige de commande 5. On verra plus loin que la partie creuse interne du papillon est divisée en deux parties par un plateau de fixation 13 de la tige de commande, une partie vers le bas coté tête de robinet et appelée partie de tête et une partie vers le haut à l'opposé de la précédente, appelée partie de verrouillage. Le plateau de fixation 13 comporte une forme creuse traversante 19 complémentaire de la partie avec méplats de l'axe de commande pour entraînement en rotation. La tête 3 du robinet comporte deux butées 4 opposées diamétralement, dont une seule est visible sur la Figure 1. De préférence, le corps de robinet 2 est du type vanne quart de tour.

Sur la Figure 2 on a une vue latérale perspective éclatée du moyen de verrouillage à cavalier 11 à deux pattes. Ce moyen de verrouillage comporte un cylindre 15 (serrure) à clef, une came 12 et le cavalier 11. Des accessoires optionnels à type de capuchon/chapeautage 14 de protection complètent ce moyen de verrouillage. Le capuchon 14 est destiné à protéger la serrure de la pénétration d'eau et/ou de salissures et est alors rabattu et fixé sur la partie supérieure du papillon en recouvrement de la serrure. Le cylindre comporte un stator qui viendra se bloquer en rotation dans la partie de verrouillage du papillon (méplat du stator contre un épaulement interne du papillon). La came 12 est fixée solidairement au rotor et pourra donc être actionnée par rotation de la clé. Le cavalier 11 est solidaire du cylindre mais libre en rotation.

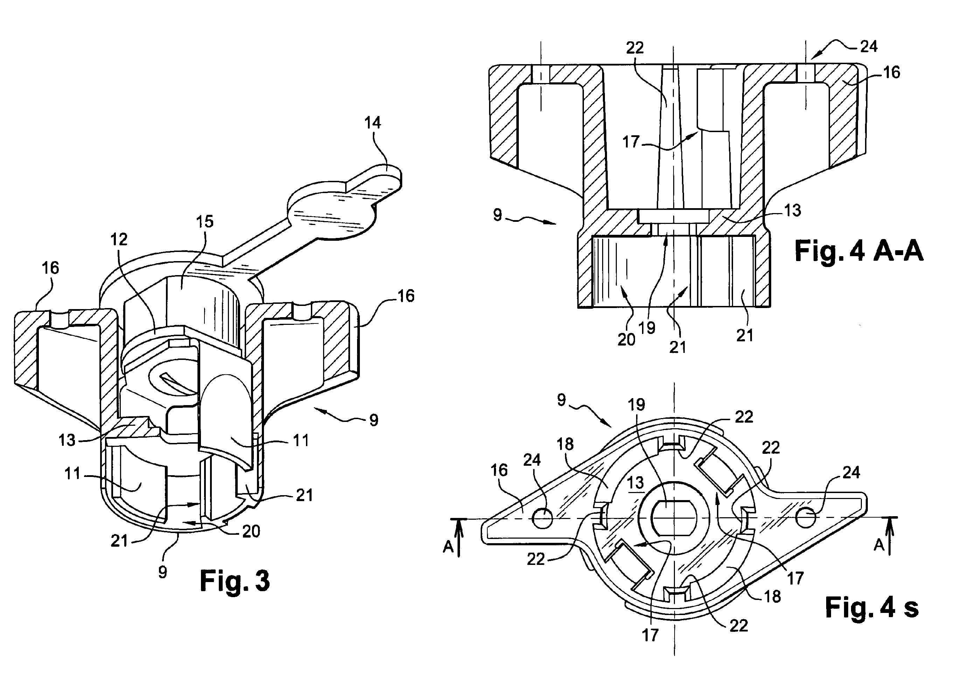

Sur la Figure 3 on a une vue latérale perspective semi transparence du papillon du robinet avec le moyen de verrouillage à cavalier en place, la partie du papillon coté observateur ayant été rendu transparente. On constate que les pattes du cavalier 11 sont passées vers la partie de tête à travers des ouvertures ajustées 18 du plateau de fixation 13 et pourront alors s'intercaler entre les butées 4 de la tête 3 de robinet et les contre-butées 21, le cylindre 15 étant en place dans la partie de verrouillage. Lorsque les pattes du cavalier ne sont pas passées dans la partie de tête du papillon 9, les butées 4 de la tête 3 du robinet peuvent circuler dans des évidements 20 délimités par des contre-butées 21 limitant leur course. Lorsque les pattes du cavalier sont passées dans la partie de tête du papillon 9, les butées 4 de la tête 3 du robinet sont bloquées dans les évidements 20 par les contre-butées 21 et les pattes du cavalier.

Sur la Figure 3, la clef a été tournée de manière à placer le moyen de verrouillage en position de verrouillage, c'est-à-dire que les extrémités de la came 12 sont engagées sous deux épaulements 17 (bossages) internes de la partie de verrouillage du papillon et, de ce fait, le moyen de verrouillage n'est plus extractible et la clef ayant été retirée, il n'est plus possible de faire tourner le rotor vers un position de déverrouillage dans laquelle les extrémités de la came ne seraient plus sous les épaulements ce qui permettrait d'extraire le moyen de verrouillage et donc de désengager les pattes du cavalier hors de la partie de tête du papillon.

Afin de faciliter l'introduction du cavalier dans la partie de verrouillage du papillon et le passage des extrémités de pattes dans les ouvertures ajustées, le papillon du robinet comporte intérieurement des colonnes de guidage 22 latérales de la patte du cavalier vers l'ouverture 18 ajustée du plateau de fixation, les colonnes de guidage étant étendues de haut en bas dans la partie de verrouillage du papillon. Le guidage obtenu est encore amélioré du fait que les bords des colonnes de guidage latérales sont inclinés vers l'extrémité correspondante de l'ouverture ajustée correspondante du plateau de fixation, les bords d'une paire de colonnes de guidage latérales étant plus écartés vers l'extrémité supérieure de la partie de verrouillage, assurant ainsi un centrage progressif lors de la descente du cavalier.

On va maintenant détailler la structure d'un exemple de réalisation préféré d'un papillon (premier exemple) qui ne nécessite pas de moyens complexes pour sa fabrication, notamment qui ne nécessite pas d'outil de moulage mobile ou d'usinage pour la réalisation de l'épaulement 17 destiné au blocage en extraction de la came du moyen de verrouillage.

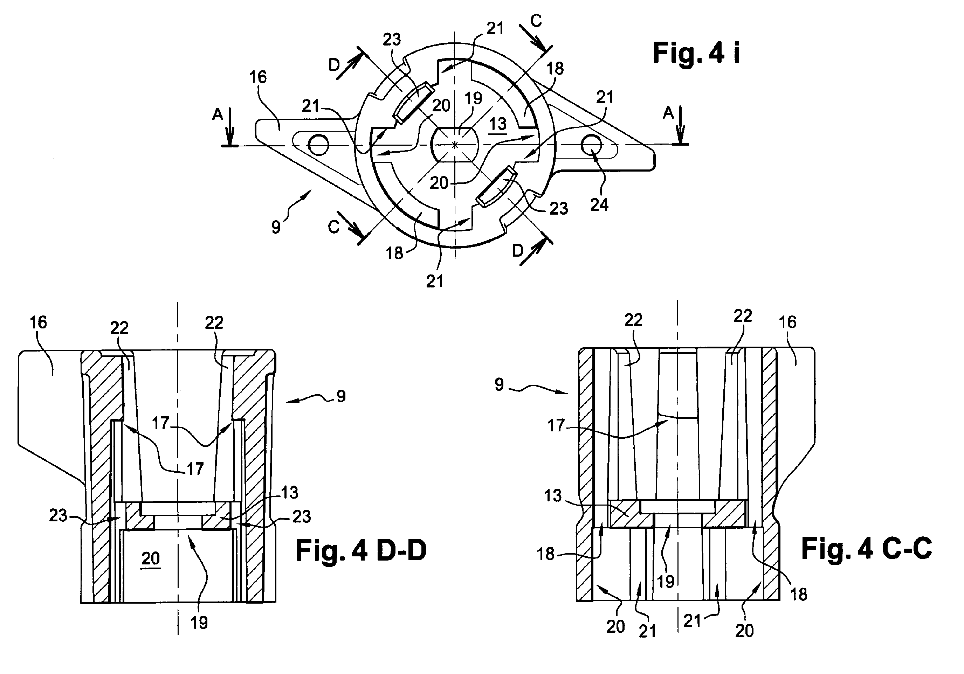

La Figure 4i est une vue de dessous, par la partie de tête, et vers le haut de cet exemple préféré de réalisation et on y distingue deux évidements 20 opposés, circulaires sur environ 90°, chacun délimité par deux contre-butées 21 et qui sont destinés à la circulation des butées 4 de la tête 3 du robinet sur un quart de tour. On distingue intérieurement, plus loin, le plateau de fixation 13 avec son ouverture 19 pour passage et fixation de la tige de commande 5, ses ouvertures 18 ajustées destinées au passage des pattes du cavalier et des ouvertures de moulage 23 qui sont les vestiges de doigts de moulage destinés à réaliser, lors du moulage du papillon, les épaulements 17 qui sont dans la partie de verrouillage du papillon. On distingue enfin un peu plus loin et extérieurement deux ailes 16 latérales qui comportent des perçages 24 pour passage d'un fil témoin (fil plombé notamment).

La Figure 4s est une vue de dessus, par la partie de verrouillage, vers le bas, du même papillon et on y distingue les deux épaulements 17 et, plus loin, le plateau de fixation 13 avec son ouverture 19 pour passage et fixation de la tige de commande 5, ses ouvertures 18 ajustées destinées au passage des pattes du cavalier, les ouvertures de moulage 23 non visibles étant masquées par les épaulements 17. Les épaulements 17 sont destinés à bloquer en rotation (et en translation d'extraction lorsque les extrémités de la came sont dessous) le cylindre (serrure). On note enfin la présence des colonnes de guidage 22 bordant les ouvertures 18 ajustées du plateau de fixation 13.

La Figure 4A-A est une coupe verticale selon A-A du même papillon et on distingue dans la partie de verrouillage délimitée vers le bas par le plateau de fixation 13 avec son ouverture 19 pour passage et fixation de la tige de commande 5, un des épaulements 17 et une des colonnes de guidage 22. Dans la partie de tête, on distingue un des évidements 20 et deux des contre-butées 21.

La Figure 4C-C est une coupe verticale selon C-C du même papillon et qui passe par les ouvertures de moulage 23 du plateau 13 de fixation. On y distingue dans la partie de verrouillage des épaulements 17 et des colonnes de guidage 22. Dans la partie de tête, on distingue un des évidements 20.

La Figure 4D-D est une coupe verticale selon D-D du même papillon et qui passe par les ouvertures ajustées 18 du plateau 13 de fixation. On y distingue dans la partie de verrouillage un des épaulements 17 et des colonnes de guidage 22. On peut noter que l'épaulement 17 présente une face inférieure inclinée afin de faciliter la translation de la came sous l'épaulement. Dans la partie de tête, on distingue des évidements 20 et des contre-butées 21.

Les alternatives de réalisation qui vont maintenant être présentées sont plus complexes à réaliser car elles nécessites la mise en oeuvre, lors du moulage, d'organes mobiles ou, alors, un usinage ultérieur.

Ainsi, sur les Figures 5, 5i, 5s et 5A-A, l'épaulement 17 de blocage de la came qui peut se présenter sous forme d'une rainure d'arrêt est obtenue grâce à un noyau pivotant lors du moulage car elle est en contre-dépouille. Une telle réalisation est complexe mais permet d'obtenir une pièce simple et robuste. Dans une telle alternative, le plateau de fixation 13 ne comporte pas d'ouvertures de moulage 23.

Sur les Figures 6, 6i, 6B-B et 6C-C, l'épaulement 17 de blocage de la came qui se présente sous forme d'une rainure d'arrêt est obtenue par un/des tiroirs pénétrant radialement dans le corps cylindrique du papillon par le dessous de la ou des ailes de manoeuvre, ce qui laisse un/des orifices latéraux 25 sur le coté du papillon.

On comprend que le robinet de l'invention peut encore être décliné selon d'autres modalités de mise en oeuvre et notamment en fonction de la structure de la butée de la tête de robinet, de la structure de la tige de commande, de la mise en oeuvre de moyens de blocage spécifique ou non des pattes du cavalier sur la tête de robinet indépendamment ou non des butées et contre-butées, sans pour autant sortir du champ de protection défini par les revendications ci-jointe.

## Revendications

1. Robinet (1) quart de tour à papillon (9) de manoeuvre d'ouverture/fermeture verrouillable, le robinet ayant une tête de commande (3) sensiblement cylindrique se poursuivant axialement vers le haut par une tige de commande (5) en rotation, le papillon étant fixé sur la tige de commande pour entraînement en rotation de ladite tige en fonction de la rotation dudit papillon, la tête de commande comportant au moins une butée (4) coopérant avec au moins une contre-butée (21) correspondante du papillon et destinés à limiter la rotation du papillon avec entraînement de la tige de commande sur un quart de tour seulement,
**caractérisé en ce que** le papillon du robinet est un organe tubulaire comportant intérieurement un plateau (13) de fixation de la tige de commande, ledit plateau de fixation sensiblement horizontal séparant l'espace interne creux du papillon en une partie de tête, vers le bas et la tête du robinet, et une partie de verrouillage, vers le haut à l'opposé de la précédente, la partie de verrouillage comportant un moyen de verrouillage (15) d'un cavalier (11) d'immobilisation en rotation du papillon, le cavalier comportant au moins une patte allongée s'étendant à travers une ouverture (18) ajustée du plateau de fixation entre la partie de tête et la partie de verrouillage pouvant être, en condition de déverrouillage, déplacé verticalement en translation afin de pouvoir engager ou dégager la patte de la partie de tête, et, en condition de verrouillage, bloqué avec la patte engagée dans la partie de tête, la patte engagée dans la partie de tête avec le papillon en butée étant alors disposée entre une butée (4) et une contre-butée (21), l'ouverture ajustée du plateau de fixation immobilisant en rotation la patte par rapport au papillon, le moyen de verrouillage en condition de verrouillage permettant d'immobiliser en translation le cavalier dans l'espace interne creux du papillon.

2. Robinet selon la revendication 1, **caractérisé en ce que** la tête (3) de robinet comporte au moins une butée (4) en forme d'ergot débordant sensiblement à l'horizontale, le papillon comportant dans sa partie de tête, intérieurement, au moins un évidement circulaire (20) sensiblement horizontal limité par des contre-butées (21) à ses deux extrémités et dans lequel peut circuler sur un quart de tour la butée (4).

3. Robinet selon la revendication 2, **caractérisé en ce que** la tête (3) de robinet comporte deux butées (4) diamétralement opposées en forme d'ergots débordants sensiblement à l'horizontale, le papillon (9) comportant dans sa partie de tête, intérieurement, deux évidements (20) circulaires sensiblement horizontaux, diamétralement opposés, chacun des évidements étant limité par des contre-butées (21) à ses deux extrémités et la butée correspondante pouvant y circuler sur un quart de tour, et **en ce que** le cavalier (11) est en forme de U inversé avec deux pattes, le plateau de fixation (13) comportant deux ouvertures ajustées (18) diamétralement opposées, chacune permettant le passage d'une des pattes, chacune des pattes venant interférer dans l'évidemment (20) correspondant avec une butée (4) et contre-butée (21) correspondante.

4. Robinet selon l'une quelconque des revendications précédentes, **caractérisé en ce que** le moyen de verrouillage du cavalier (11) est choisi parmi un des moyens suivants :
- un collage,
- un soudage avec ou sans apport de matière,
- une rondelle clipsable dans une gorge circulaire de la partie de verrouillage du papillon,
- une rondelle clipsable dans une gorge circulaire de la tige de commande, le plateau de fixation et le cavalier étant percés axialement pour passage de ladite tige de commande vers la partie de verrouillage,
- un cylindre à clef avec stator et rotor, le cylindre comportant une came solidaire en rotation avec le rotor, le cavalier étant fixé à l'extrémité du cylindre libre en rotation par rapport audit cylindre, la partie de verrouillage du papillon comportant au moins un épaulement débordant vers l'intérieur pouvant coopérer avec la came en position de verrouillage, la came étant alors bloquée en rotation par le cylindre et bloquée en translation par l'épaulement en empêchant l'extraction du cylindre hors de la partie de verrouillage du papillon et le stator étant bloqué en rotation dans la partie de verrouillage du papillon,
- un lien rendu solidaire du papillon et devant être rompu ou endommagé pour être retiré,
- une pièce maintenue par un lien rendu solidaire du papillon et devant être rompu ou endommagé pour être retiré,
- un fil de plombage rendu solidaire du papillon et devant être rompu ou endommagé pour être retiré,
- une pièce maintenue par un fil de plombage rendu solidaire du papillon et devant être rompu ou endommagé pour être retiré.

5. Robinet selon l'une quelconque des revendications précédentes, **caractérisé en ce que** la tige de commande comporte au moins un méplat (6) et que le plateau de fixation (13) du papillon comporte une forme creuse complémentaire pour au moins blocage en rotation entre ladite tige de commande et ledit papillon et **en ce que** le moyen permettant de fixer le papillon (9) sur la tige de commande (5) est choisi parmi :
- un vissage, l'extrémité de la tige de commande étant filetée (7) et traversant par un orifice axial (19) le plateau de fixation (13), un écrou (10) étant vissé sur l'extrémité de la tige de commande dans la partie de verrouillage du papillon,
- un collage de la tige de commande dans la forme creuse complémentaire,
- un soudage avec ou sans apport de matière,
- un forçage de la tige de commande dans la forme creuse complémentaire,
- un clipsage, l'extrémité de la tige de commande comportant une gorge circulaire et traversant par un orifice axial le plateau de fixation, une rondelle clipsable étant clipsée dans la gorge de l'extrémité de la tige de commande dans la partie de verrouillage du papillon.

6. Robinet selon la revendication 5, **caractérisé en ce que** le moyen permettant de fixer le papillon sur la tige de commande comporte un renfort sous la forme d'un insert (8) métallique plan globalement circulaire s'engrainant en périphérie à la face interne du papillon dans sa partie de tête et en engagement de blocage en rotation sur la tige de commande par un orifice axial au niveau du méplat et l'insert ayant son orifice axial de forme complémentaire de la tige de commande.

7. Robinet selon les revendications 3, 4, 5 et 6, **caractérisé en ce que** le moyen de verrouillage du cavalier est un cylindre (15) à clef avec stator et rotor, le cylindre comportant une came (12) solidaire en rotation avec le rotor, le cavalier (11) étant fixé à l'extrémité du cylindre libre en rotation par rapport audit cylindre, la came ayant deux extrémités opposées, la partie de verrouillage du papillon (9) comportant deux épaulements (17) opposés diamétralement, débordants vers l'intérieur, chacun des épaulements pouvant coopérer avec l'extrémité correspondante de la came en position de verrouillage, la came étant alors bloquée en rotation par le cylindre et bloquée en translation par les épaulements en empêchant l'extraction du cylindre hors de la partie de verrouillage du papillon et le stator étant bloqué en rotation dans la partie de verrouillage du papillon, **en ce que** le moyen permettant de fixer le papillon sur la tige de commande est un vissage, l'extrémité de la tige de commande étant filetée et traversant par un orifice axial le plateau de fixation, un écrou (10) étant vissé sur l'extrémité de la tige de commande dans la partie de verrouillage du papillon.

8. Robinet selon la revendication 4 ou 7, **caractérisé en ce que** la face inférieure orientée vers le plateau de fixation (13) de l'épaulement (17) est arrondie concave afin de faciliter l'engagement de la came (12) du cylindre sous ledit épaulement.

9. Robinet selon la revendication 7 ou 8, **caractérisé en ce que** le papillon est réalisé par moulage et que le plateau de fixation du papillon est en outre perforé à la verticale de chaque épaulement par des ouvertures de moulage (23) qui sont les vestiges de doigts de moulage destinés à réaliser, lors du moulage du papillon, les épaulements (17).

10. Papillon (9) de manoeuvre spécialement configuré pour mise en oeuvre dans le robinet de l'une quelconque des revendications précédentes, ledit robinet ayant une tête de commande (3) sensiblement cylindrique se poursuivant axialement vers le haut par une tige de commande (5) en rotation, le papillon étant destiné à être fixé sur la tige de commande pour entraînement en rotation de ladite tige en fonction de la rotation dudit papillon, la tête de commande comportant au moins une butée (4) destinée à coopérer avec au moins une contre-butée (21) correspondante du papillon pour pouvoir limiter la rotation du papillon tout en pouvant entraîner la tige de commande sur un quart de tour seulement, ledit papillon du robinet étant un organe tubulaire comportant intérieurement un plateau (13) destiné à la fixation de la tige de commande, ledit plateau de fixation sensiblement horizontal séparant l'espace interne creux du papillon en une partie de tête, vers le bas et destinée à venir en relation avec la tête du robinet, et une partie de verrouillage vers le haut à l'opposé de la précédente, ledit plateau comportant au moins une ouverture (18) entre la partie de tête et la partie de verrouillage, ladite ouverture étant destinée au passage d'une patte allongée d'un cavalier (11) d'immobilisation en rotation dudit papillon, ladite ouverture étant ajustée à ladite patte.

11. Papillon selon la revendication 10, **caractérisé en ce que** pour une tête de robinet comportant deux butées (4) diamétralement opposées en forme d'ergots débordants sensiblement à l'horizontale, le papillon comporte dans sa partie de tête, intérieurement, deux évidements circulaires (20) sensiblement horizontaux, diamétralement opposés, chacun des évidements étant limité par des contre-butées (21) à ses deux extrémités et la butée correspondante pouvant y circuler sur un quart de tour, et **en ce que** pour un cavalier (11) qui est en forme de U inversé avec deux pattes, le plateau de fixation comporte deux ouvertures ajustées (18) diamétralement opposées, chacune étant destinée à permettre le passage d'une des pattes, chacune des pattes étant destinée à venir interférer dans l'évidemment (20) correspondant.

12. Papillon selon la revendications 11, **caractérisé en ce que** le moyen de verrouillage du cavalier est un cylindre (15) à clef avec stator et rotor, le cylindre comportant une came (12) solidaire en rotation avec le rotor, le cavalier étant fixé à l'extrémité du cylindre libre en rotation par rapport audit cylindre, la came ayant deux extrémités opposées, la partie de verrouillage du papillon comportant deux épaulements (17) opposés diamétralement, débordants vers l'intérieur, chacun des épaulements pouvant coopérer avec l'extrémité correspondante de la came en position de verrouillage, la came étant alors bloquée en rotation par le cylindre et bloquée en translation par les épaulements en empêchant l'extraction du cylindre hors de la partie de verrouillage du papillon et le stator étant bloqué en rotation dans la partie de verrouillage du papillon, **en ce que** pour une tige de commande comportant au moins un méplat, le plateau de fixation du papillon comporte une forme creuse complémentaire pour au moins blocage en rotation entre ladite tige de commande et ledit papillon et le moyen permettant de fixer le papillon sur la tige de commande est un vissage, l'extrémité de la tige de commande étant filetée et traversant par un orifice axial le plateau de fixation, un écrou (10) étant vissé sur l'extrémité de la tige de commande dans la partie de verrouillage du papillon.

13. Papillon selon la revendication 12, **caractérisé en ce qu'**il est réalisé par moulage et que le plateau de fixation du papillon est en outre perforé à la verticale de chaque épaulement pour permettre le passage d'une forme de réalisation d'épaulement du moule.

14. Procédé de mise en oeuvre d'un robinet, **caractérisé en ce qu'**avec le robinet selon l'une quelconque des revendications 1 à 9, alors que le moyen de verrouillage à cavalier est déverrouillé et la/les pattes dudit cavalier désengagées de la partie de tête du papillon, on tourne à fond le papillon puis on réengage la/les pattes dudit cavalier dans la partie de tête du papillon afin que la/les pattes soient disposées entre une butée et une contre-butée, puis on place le moyen de verrouillage en condition de verrouillage afin d'immobiliser en translation le cavalier dans l'espace interne creux du papillon.

15. Procédé selon la revendication 14, **caractérisé en ce que** pour transformer le robinet verrouillé en robinet non verrouillé, on retire le cavalier et le moyen de verrouillage du papillon par l'extrémité supérieure libre de la partie de verrouillage du papillon.

16. Procédé selon la revendication 15, **caractérisé en ce que**, une fois le cavalier et le moyen de verrouillage retirés, on bouche l'extrémité supérieure avec un bouchon de préférence relié au papillon par un lien souple le rendant imperdable.

## Claims

1. A quarter turn butterfly (9) valve (1) with lockable operating handle for opening/closing, the valve having a substantially cylindrical operating head (3) extended axially upwards by an operating rod (5) rotatably, wherein the butterfly is fixed to the operating rod for rotatably driving said rod in relation to the rotation of said butterfly, the operating head comprising at least one stop (4) co-operating with at least one corresponding counter-stop (21) of the butterfly and intended for limiting the rotation of the butterfly while driving the operating rod over a quarter turn only, **characterised in that** the butterfly of the valve is a tubular member comprising internally a platen (13) for fastening the operating rod, wherein said substantially horizontal fastening platen separates the hollow internal space of the butterfly into a head section, downwards and the head of the valve, and a locking section, upwards opposite to the latter, the locking section including a locking means (15) of a jumper (11) for freezing the rotation of the butterfly, the jumper comprising at least one elongated tab extending through an opening (18) adjusted of the fastening platen between the head section and the locking part which may be, in unlocked condition, moved vertically in translation so as to engage into or release the tab of the head section, and, in locked condition, blocked with the tab engaged into the head section, the tab engaged into the head section with the abutting butterfly then being arranged between a stop (4) and a counter-stop (21), the adjusted opening of the fastening platen blocking rotatably the tab relative to the butterfly, wherein the locking means in locked condition enables to lock in translation the jumper in the hollow internal space of the butterfly.

2. A valve according to claim 1, **characterised in that** the valve head (3) includes at least one stop (4) in the form of a toe overhanging substantially horizontally, wherein the butterfly valve comprises in its head section, internally, at least one circular recess (20) substantially horizontal limited by counter-stops (21) at both its ends and wherein may circulate over a quarter turn the stop (4).

3. A valve according to claim 2, **characterised in that** the valve head (3) includes two stops (4) diametrically opposite in the form of toes overhanging substantially horizontally, the butterfly (9) comprising in its head section, internally, two recesses (20) circular and substantially horizontal, diametrically opposite, wherein each of the recesses is limited by counter-stops (21) at both its ends and the corresponding stop may circulate therein over a quarter turn, and **in that** the jumper (11) is in the form of an inverted U with two tabs, the fastening platen (13) containing two adjusted openings (18) diametrically opposite, each letting through one of the tabs, wherein each of the tabs interferes in the corresponding recess (20) with a stop (4) and a corresponding counter-stop (21).

4. A valve according to any of the previous claims, **characterised in that** the locking means of the jumper (11) is selected among one of the following means:
- gluing,
- welding with or without addition of material,
- a washer which may be snapped into a circular groove of the locking section of the butterfly,
- a washer which may be snapped into a circular groove of the operating rod, wherein the fastening platen and the jumper are bored axially for letting through said operating rod toward the locking section,
- a key-operated cylinder with stator and rotor, the cylinder comprising a cam interconnected rotatably with the rotor, the jumper being fixed to the end of the cylinder freely rotating relative to said cylinder, wherein the locking section of the butterfly comprising at least a shoulder overhanging inwardly which may co-operate with the cam in locking position, the cam being then blocked in rotation by the cylinder and blocked in translation by the shoulder while preventing the cylinder from being ejected outside the locking section of the butterfly and the stator being blocked in rotation in the locking section of the butterfly,
- a link integral with the butterfly and which must be broken or damaged for removal,
- a part held by a link integral with the butterfly and which must be broken or damaged for removal,
- a lead wire integral with the butterfly and which must be broken or damaged for removal,
- a part held by a lead wire integral with the butterfly and which must be broken or damaged for removal.

5. A valve according to any of the previous claims, **characterised in that** the operating rod includes at least one root face (6) and un that the fastening platen (13) of the butterfly includes a complementary hollow shape for at least blocking the rotation between said operating rod and said butterfly and **in that** the means enabling to fasten the butterfly (9) to the operating rod (5) is selected among:
- screwing, wherein the end of the operating rod is threaded (7) and runs through an axial orifice (19) of the fastening platen (13), a nut (10) being screwed on the end of the operating rod in the locking section of the butterfly,
- gluing the operating rod in the complementary hollow shape,
- welding with or without addition of material,
- force-fitting the operating rod in the complementary hollow shape,
- snap-on fastening, wherein the end of the operating rod comprises a circular groove and runs through an axial orifice of the fastening platen a washer which may be snapped into the groove of the end of the operating rod in the locking section of the butterfly.

6. A valve according to claim 5, **characterised in that** the means enabling to attach the butterfly to the operating rod includes a reinforcing piece in the form of a globally circular metallic planar insert (8) meshing into the periphery of the internal face of the butterfly in its head section and engaging to block the rotation of the operating rod through an axial orifice at the root face and wherein the insert has its axial orifice of matching shape on the operating rod.

7. A valve according to claims 3, 4, 5 and 6, **characterised in that** the locking means of the jumper is a key-operated cylinder (15) with stator and rotor, wherein the cylinder comprises a cam (12) interconnected rotatably with the rotor, the jumper (11) being fixed to the end of the cylinder freely rotating relative to said cylinder, the cam having two opposite ends, the locking section of the butterfly (9) containing two shoulders (17) diametrically opposite, overhanging inwardly, wherein each of the shoulders may co-operate with the corresponding end of the cam in locking position, the cam being then blocked in rotation by the cylinder and blocked in translation by the shoulders while preventing the cylinder from being ejected outside the locking section of the butterfly and the stator being blocked in rotation in the locking section of the butterfly, **in that** the means enabling to attach the butterfly to the operating rod consists of a screw, wherein the end of the operating rod is threaded and runs through an axial orifice of the fastening platen, a nut (10) being screwed on the end of the operating rod in the locking section of the butterfly.

8. A valve according to claim 4 or 7, **characterised in that** the lower face oriented towards the fastening platen (13) of the shoulder (17) is rounded and concave for easier engagement of the cam (12) of the cylinder under said shoulder.

9. A valve according to claim 7 or 8, **characterised in that** the butterfly is provided by moulding and that the fastening platen of the butterfly is moreover bored vertical to each shoulder through moulding apertures (23) which are the remains of moulding fingers intended for providing, when moulding the butterfly, the shoulders (17).

10. An operating butterfly (9) especially designed for implementation in the valve of any of the previous claims, said valve having an operating head (3) substantially cylindrical and extended axially upwards by an operating rod (5) rotatably, wherein the butterfly valve is intended for attachment to the operating rod for rotatably driving said rod in relation to the rotation of said butterfly, the operating head comprising at least one stop (4) intended for co-operating with at least one corresponding counter-stop (21) of the butterfly valve to be able to limit the rotation of the butterfly while driving the operating rod over a quarter turn only, wherein said butterfly of the valve is a tubular member comprising internally a platen (13) intended for fastening the operating rod, wherein said substantially horizontal fastening platen separates the hollow internal space of the butterfly into a head section, downwards and intended for co-operating with the head of the valve, and a locking section upwards opposite the latter, said platen comprising at least one opening (18) between the head section and the locking section, said opening being intended for letting through the elongated tab of a jumper (11) for freezing the rotation of the butterfly, said opening being adjusted to said tab.

11. A butterfly according to claim 10, **characterised in that** for a valve head comprising two stops (4) diametrically opposite in the form of toes overhanging substantially horizontally, the butterfly comprises in its head section, internally, two substantially horizontal circular recesses, diametrically opposite, wherein each of the recesses is limited by counter-stops at both its ends and the corresponding stop may circulate therein over a quarter turn, and **in that** for a jumper (11) which is in the form of an inverted U with two tabs, the fastening platen includes two adjusted openings (18) diametrically opposite, wherein each is intended for letting through one of the tabs, each of the tabs being intended for engaging into the corresponding recess (20).

12. A butterfly according to claim 11, **characterised in that** the locking means of the jumper is a key-operated cylinder (15) with stator and rotor, wherein the cylinder comprises a cam (12) interconnected rotatably with the rotor, the jumper being fixed to the end of the cylinder freely rotating relative to said cylinder, the cam having two opposite ends, the locking section of the butterfly containing two shoulders (17) diametrically opposite, overhanging inwardly, wherein each of the shoulders may co-operate with the corresponding end of the cam in locking position, the cam being then blocked in rotation by the cylinder and blocked in translation by the shoulders while preventing the cylinder from being ejected outside the locking section of the butterfly and the stator being blocked in rotation in the locking section of the butterfly, **in that** for an operating rod including at least one root face, the fastening platen of the butterfly includes a complementary hollow shape for at least blocking the rotation between said operating rod and said butterfly and the means enabling to fasten the butterfly on the operating rod is a screw, wherein the end of the operating rod is threaded and runs through an axial orifice of the fastening platen, a nut (10) being screwed on the end of the operating rod in the locking section of the butterfly.

13. A butterfly according to claim 12, **characterised in that** it is provided by moulding and that the fastening platen of the butterfly is moreover bored vertical to each shoulder for letting through a form for the realization of the shoulder in the mould.

14. A method of implementation of a valve, **characterised in that** with the valve according to any of the claims 1 to 9, whereas the jumper-actuated locking means is unlocked and the tab(s) of said jumper disengaged from the head section of the butterfly, the butterfly is rotated fully and the tab(s) of said jumper is(are) re-engaged into the head section of the butterfly so that the tab(s) is/are arranged between a stop and a counter-stop, then the locking means is brought in locked condition so as to lock in translation the jumper in the hollow internal space of the butterfly.

15. A method according to claim 14, **characterised in that** for transforming the locked valve into an unlocked valve, the jumper and the locking means of the butterfly are removed through the free upper end of the locking section of the butterfly.

16. A method according to claim 15, **characterised in that**, once the jumper and the locking means have been removed, the upper end is plugged with a plug preferably connected to the butterfly by a flexible link which makes it captive.

## Patentansprüche

1. Viertelverdrehungsventil (1) mit verriegelbarer Betätigungsdrosselklappe (9) zum Öffnen/Verschließen, wobei das Ventil einen im Wesentlichen zylindrischen Bedienungskopf (3) aufweist, der axial nach oben durch eine Bedienungsstange (5) in Drehung weiterverläuft, wobei die Drosselklappe auf der Bedienungsstange befestigt ist, um die Stange in Abhängigkeit der Drehung der Drosselklappe drehend anzutreiben, wobei der Bedienungskopf mindestens einen Anschlag (4) umfasst, der mit mindestens einem Gegenanschlag (21) zusammenwirkt, welcher der Drosselklappe entspricht und dazu bestimmt ist, die Drehung der Drosselklappe mit dem Antreiben der Bedienungsstange auf lediglich eine Viertelverdrehung einzuschränken,
**dadurch gekennzeichnet, dass** die Drosselklappe des Ventils ein röhrenförmiges Element ist, umfassend im Inneren eine Spannplatte (13) der Bedienungsstange, wobei die im Wesentlichen horizontale Spannplatte den hohlen Innenraum der Drosselklappe in einen Kopfteil, nach unten und zum Ventilkopf hin, und in einen Verriegelungsteil, nach oben und entgegengesetzt zum Letztgenannten, teilt, wobei der Verriegelungsteil ein Verriegelungsmittel (15) einer Krampe (11) zur Immobilisierung in Drehung der Drosselklappe umfasst, wobei die Krampe mindestens eine verlängerte Lasche umfasst, die sich durch eine angepasste Öffnung (18) der Spannplatte zwischen dem Kopfteil und dem Verriegelungsteil erstreckt, welcher bei der Entriegelung in Translation vertikal verlagert werden kann, um die Lasche in den Kopfteil eingreifen zu lassen oder sie von diesem zu lösen, und bei der Verriegelung mit der Lasche, die mit dem Kopfteil in Eingriff ist, blockiert werden kann, wobei die Lasche, die mit dem Kopfteil in Eingriff ist, mit der Drosselklappe im Anschlag ist, und somit zwischen einem Anschlag (4) und einem Gegenanschlag (21) angeordnet ist, wobei die angepasste Öffnung der Spannplatte in Drehung die Lasche bezüglich der Drosselklappe immobilisiert, wobei das Verriegelungsmittel bei der Verriegelung das Immobilisieren in Translation der Krampe im hohlen Innenraum der Drosselklappe ermöglicht.

2. Ventil nach Anspruch 1, **dadurch gekennzeichnet, dass** der Kopf (3) des Ventils mindestens einen Anschlag (4) in der Form eines im Wesentlichen in der Horizontalen vorragenden Zentrierzapfens umfasst, wobei die Drosselklappe in ihrem Kopfteil im Inneren mindestens eine im Wesentlichen horizontale runde Aussparung (20) umfasst, die an ihren zwei Enden durch Gegenanschläge (21) eingeschränkt ist, und worin der Anschlag (4) in einer Viertelverdrehung kreisen kann.

3. Ventil nach Anspruch 2, **dadurch gekennzeichnet, dass** der Kopf (3) des Ventils zwei diametral entgegengesetzte Anschläge (4) in Form von im Wesentlichen in der Horizontalen vorragenden Zentrierzapfen umfasst, wobei die Drosselklappe (9) in ihrem Kopfteil im Inneren zwei diametral entgegengesetzte im Wesentlichen horizontale runde Aussparungen (20) umfasst, wobei jede der Aussparungen jeweils an ihren zwei Enden durch ihre Gegenanschläge (21) eingeschränkt ist und der entsprechende Anschlag dort in einer Viertelverdrehung kreisen kann, und **dadurch**, dass die Krampe (11) eine umgekehrte U-Form mit zwei Laschen aufweist, wobei die Spannplatte (13) zwei diametral entgegengesetzte angepasste Öffnungen (18) umfasst, wobei jede jeweils den Durchgang von einer der Laschen ermöglicht, wobei jede der Laschen jeweils in die entsprechende Aussparung (20) mit einem entsprechenden Anschlag (4) und Gegenanschlag (21) interferiert.

4. Ventil nach einem der vorhergehenden Ansprüche, **dadurch gekennzeichnet, dass** das Verriegelungsmittel der Krampe (11) aus den folgenden Mitteln ausgewählt ist:
- einem Ankleben,
- einem Schweißen mit oder ohne Materialzufuhr,
- einer Scheibe, die in eine runde Furche des Verriegelungsteils der Drosselklappe geklemmt werden kann,
- einer Scheibe, die in eine runde Furche der Bedienungsstange geklemmt werden kann, wobei die Spannplatte und die Krampe axial durchbohrt werden, um die Bedienungsstange zum Verriegelungsteil hin durchzuführen,
- einem Schlüsselzylinder mit Stator und Rotor, wobei der Zylinder eine Nocke umfasst, die in Drehung mit dem Rotor verbunden ist, wobei die Krampe am Ende des freien Zylinders in Drehung bezüglich des Zylinders befestigt ist, wobei der Verriegelungsteil der Drosselklappe mindestens einen Vorsprung umfasst, der nach innen vorragt und mit der Nocke in der Verriegelungsposition zusammenwirken kann, wobei die Nocke somit in Drehung vom Zylinder blockiert wird und in Translation vom Vorsprung blockiert wird, indem die Entfernung des Zylinders aus dem Verriegelungsteil der Drosselklappe verhindert wird und der Stator in Drehung im Verriegelungsteil der Drosselklappe blockiert wird,
- einer Bindung, die mit der Drosselklappe verbunden wird und unterbrochen oder beschädigt werden muss, um hinausgezogen zu werden,
- einem Teil, das durch eine Bindung, die mit der Drosselklappe verbunden wird, aufrecht gehalten wird und unterbrochen oder beschädigt werden muss, um hinausgezogen zu werden,
- einem Plombierungsdraht, der mit der Drosselklappe verbunden wird, und unterbrochen oder beschädigt werden muss, um hinausgezogen zu werden,
- einem Teil, das durch einen Plombierungsdraht, der mit der Drosselklappe verbunden wird, aufrecht gehalten wird, und unterbrochen oder beschädigt werden muss, um hinausgezogen zu werden.

5. Ventil nach einem der vorhergehenden Ansprüche, **dadurch gekennzeichnet, dass** die Bedienungsstange mindestens eine Abflachung (6) umfasst und dass die Spannplatte (13) der Drosselklappe eine komplementäre hohle Form für mindestens die Blockierung in Drehung zwischen der Bedienungsstange und der Drosselklappe umfasst, und wobei das Mittel, das die Befestigung der Drosselklappe (9) auf der Bedienungsstange (5) ermöglicht, ausgewählt ist aus:
- einer Verschraubung, wobei das Ende der Bedienungsstange mit einem Gewinde (7) versehen ist und die Spannplatte (13) durch eine axiale Öffnung (19) durchquert, wobei eine Mutter (10) auf das Ende der Bedienungsstange im Verriegelungsteil der Drosselklappe geschraubt wird,
- einem Ankleben der Bedienungsstange an die hohle komplementäre Form,
- einem Schweißen mit oder ohne Materialzufuhr,
- einem Einsenken der Bedienungsstange in die hohle komplementäre Form,
- einem Klemmen, wobei das Ende der Bedienungsstange einen runden Hals umfasst und durch eine axiale Öffnung die Spannplatte durchquert, wobei eine klemmbare Scheibe in den Hals des Endes der Bedienungsstange im Verriegelungsteil der Drosselklappe geklemmt wird.

6. Ventil nach Anspruch 5, **dadurch gekennzeichnet, dass** das Mittel, das die Befestigung der Drosselklappe auf der Bedienungsstange ermöglicht, eine Verstärkung in Form eines ebenen, im Allgemeinen runden metallenen Einsatzes (8) umfasst, der sich im Umfang in die innere Seite der Drosselklappe in ihrem Kopfteil einprägt und durch das Auslösen der Blockierung in Drehung auf die Bedienungsstange durch eine axiale Öffnung auf der Ebene der Abflachung, und wobei die axiale Öffnung des Einsatzes eine komplementäre Form der Bedienungsstange aufweist.

7. Ventil nach Ansprüchen 3, 4, 5 und 6, **dadurch gekennzeichnet, dass** das Verriegelungsmittel der Krampe ein Schlüsselzylinder (15) mit Stator und Rotor ist, wobei der Zylinder eine Nocke (12) umfasst, die in Drehung mit dem Rotor verbunden ist, wobei die Krampe (11) am Ende des freien Zylinders in Drehung bezüglich des Zylinders befestigt ist, wobei die Nocke zwei entgegengesetzte Enden aufweist, wobei der Verriegelungsteil der Drosselklappe (9) zwei diametral entgegengesetzte Vorsprünge (17) umfasst, die nach innen vorragen, wobei jeder der Vorsprünge mit dem entsprechenden Ende der Nocke in der Verriegelungsposition zusammenwirken kann, wobei die Nocke somit in Drehung durch den Zylinder blockiert ist und in Translation durch die Vorsprünge, indem die Entfernung des Zylinders aus dem Verriegelungsteil der Drosselklappe verhindert wird, und wobei der Stator in Drehung im Verriegelungsteil der Drosselklappe blockiert wird, und **dadurch**, dass das Mittel, das die Befestigung der Drosselklappe auf der Bedienungsstange ermöglicht, eine Verschraubung ist, wobei das Ende der Bedienungsstange mit einem Gewinde versehen ist und durch eine axiale Öffnung die Spannplatte durchquert, wobei eine Mutter (10) auf das Ende der Bedienungsstange im Verriegelungsteil der Drosselklappe geschraubt wird.

8. Ventil nach Anspruch 4 oder 7, **dadurch gekennzeichnet, dass** die innere Seite, die nach der Spannplatte (13) des Vorsprungs (17) ausgerichtet ist, konkav abgerundet ist, damit der Eingriff der Nocke (12) des Zylinders unter dem Vorsprung erleichtert wird.

9. Ventil nach Anspruch 7 oder 8, **dadurch gekennzeichnet, dass** die Drosselklappe durch Abguss erstellt wird und dass die Spannplatte der Drosselklappe außerdem in der Vertikalen von jedem Vorsprung durch die Abgussöffnungen (23) perforiert wird, welche die Überreste von Abgussfingern sind, die beim Abguss der Drosselklappe zur Erstellung der Vorsprünge (17) bestimmt sind.

10. Betätigungsdrosselklappe (9), die besonders konfiguriert ist, um im Ventil nach einem der vorhergehenden Ansprüche eingesetzt zu werden, wobei das Ventil einen im Wesentlichen zylindrischen Bedienungskopf (3) aufweist, der axial nach oben durch eine Bedienungsstange (5) in Drehung weiterverläuft, wobei die Drosselklappe dazu bestimmt ist, auf der Bedienungsstange befestigt zu werden, um die Stange in Abhängigkeit der Drehung der Drosselklappe drehend anzutreiben, wobei der Bedienungskopf mindestens einen Anschlag (4) umfasst, der mit mindestens einem Gegenanschlag (21) zusammenwirken soll, welcher der Drosselklappe entspricht, um die Drehung der Drosselklappe einschränken zu können, während gleichzeitig die Bedienungsstange auf lediglich eine Viertelverdrehung eingeschränkt werden kann, wobei die Drosselklappe des Ventils ein röhrenförmiges Element ist, umfassend im Inneren eine Platte (13), die zur Befestigung der Bedienungsstange bestimmt ist, wobei die im Wesentlichen horizontale Spannplatte den hohlen Innenraum der Drosselklappe in einen Kopfteil nach unten und zum In-Beziehung-Treten mit dem Kopf des Ventils bestimmt ist, und in einen Verriegelungsteil nach oben, entgegengesetzt zum Letztgenannten, trennt, wobei die Platte mindestens eine Öffnung (18) zwischen dem Kopfteil und dem Verriegelungsteil umfasst, wobei die Öffnung zum Durchgang einer verlängerten Lasche einer Krampe (11) zur Immobilisierung in Drehung der Drosselklappe bestimmt ist, wobei die Öffnung an diese Lasche angepasst ist.

11. Drosselklappe nach Anspruch 10, **dadurch gekennzeichnet, dass** für einen Ventilkopf, umfassend zwei diametral entgegengesetzte Anschläge (4) in Form von im Wesentlichen in der Horizontalen vorragenden Zentrierzapfen, die Drosselklappe in ihrem Kopfteil im Inneren zwei diametral entgegengesetzte im Wesentlichen horizontale runde Aussparungen (20) umfasst, wobei jede der Aussparungen an ihren zwei Enden durch Gegenanschläge (21) eingeschränkt ist und der entsprechende Anschlag dort in einer Viertelverdrehung kreisen kann, und **dadurch**, dass für eine Krampe (11), die eine umgekehrte U-Form mit zwei Laschen aufweist, die Spannplatte zwei diametral entgegengesetzte eingestellte Öffnungen (18) umfasst, wobei jede jeweils den Durchgang von einer der Laschen ermöglicht, wobei jede der Laschen jeweils in die entsprechende Aussparung (20) interferiert.

12. Drosselklappe nach Anspruch 11, **dadurch gekennzeichnet, dass** das Verriegelungsmittel der Krampe ein Schlüsselzylinder (15) mit Stator und Rotor ist, wobei der Zylinder eine Nocke (12) umfasst, die in Drehung mit dem Rotor verbunden ist, wobei die Krampe am Ende des freien Zylinders in Drehung bezüglich des Zylinders befestigt ist, wobei die Nocke zwei entgegengesetzte Enden aufweist, wobei der Verriegelungsteil der Drosselklappe zwei diametral entgegengesetzte Vorsprünge (17) umfasst, die nach innen vorragen, wobei jeder der Vorsprünge mit dem entsprechenden Ende der Nocke in der Verriegelungsposition zusammenwirken kann, wobei die Nocke somit in Drehung vom Zylinder blockiert wird und in Translation von den Vorsprüngen blockiert wird, indem die Entfernung des Zylinders aus dem Verriegelungsteil der Drosselklappe verhindert wird und der Stator in Drehung im Verriegelungsteil der Drosselklappe blockiert wird, und **dadurch**, dass für eine Bedienungsstange, die mindestens eine Abflachung umfasst, die Spannplatte der Drosselklappe eine komplementäre hohle Form für mindestens die Blockierung in Drehung zwischen der Bedienungsstange und der Drosselklappe umfasst, und wobei das Mittel, das die Befestigung der Drosselklappe auf der Bedienungsstange ermöglicht, eine Verschraubung ist, wobei das Ende der Bedienungsstange mit Gewinde versehen ist und eine axiale Öffnung der Spannplatte durchquert, wobei eine Mutter (10) auf das Ende der Bedienungsstange im Verriegelungsteil der Drosselklappe geschraubt wird.

13. Drosselklappe nach Anspruch 12, **dadurch gekennzeichnet, dass** sie durch Abguss erstellt wird und dass die Spannplatte der Drosselklappe außerdem in der Vertikalen von jedem Vorsprung perforiert wird, um den Durchgang einer Ausführungsform von Gussvorsprung zu ermöglichen.

14. Verfahren zur Ausführung eines Ventils, **dadurch gekennzeichnet, dass** mit dem Ventil nach einem der Ansprüche 1 bis 9, während das Verriegelungsmittel mit Krampe entriegelt wird und die Lasche/Laschen der Krampe von dem Kopfteil der Drosselklappe gelöst wird/werden, die Drosselklappe vollständig gedreht wird, dann die Lasche/Laschen der Krampe wieder mit dem Kopfteil der Drosselklappe in Eingriff gebracht wird/werden, damit die Lasche/Laschen zwischen einem Anschlag und Gegenanschlag angeordnet ist/sind, dann das Verriegelungsmittel beim Verriegeln aufgestellt wird, um in Translation die Krampe im hohlen Innenraum der Drosselklappe zu immobilisieren.

15. Verfahren nach Anspruch 14, **dadurch gekennzeichnet, dass** zum Umwandeln des verriegelten Ventils in ein nicht verriegeltes Ventil die Krampe und das Verriegelungsmittel der Drosselklappe am oberen freien Ende des Verriegelungsteils der Drosselklappe hinausgezogen werden.

16. Verfahren nach Anspruch 15, **dadurch gekennzeichnet, dass** sobald die Krampe und das Verriegelungsmittel hinausgezogen worden sind, das obere Ende mit einem Stopfen zugestopft wird, der vorzugsweise mit der Drosselklappe mittels einer biegsamen Bindung verbunden ist, wodurch er unverlierbar wird.
